# EUROPÄISCHE PATENTSCHRIFT

(11) **EP 2 693 231 B1**
(45) Veröffentlichungstag und Bekanntmachung des Hinweises auf die Patenterteilung: **26.12.2018**
(21) Anmeldenummer: 13177347.5
(22) Anmeldetag: 22.07.2013
(51) Int. Cl.: G01S 7/527, G01S 15/93

(54) **Verfahren und Vorrichtung zum Auswerten eines empfangenen Wechselsignals**
Method and device for evaluating a received change signal
Procédé et dispositif destinés à l'évaluation d'un signal alternatif reçu

(30) Priorität: 01.08.2012 DE 102012213580
(43) Veröffentlichungstag der Anmeldung: 05.02.2014
(73) Patentinhaber: ROBERT BOSCH GMBH, 70442 Stuttgart (DE)
(72) Erfinder: Kirchner, Tobias, 71636 Ludwigsburg (DE)

(56) Entgegenhaltungen:
- DE-A1- 2 219 045
- DE-A1-102009 049 069
- GB-A- 2 444 298

## Beschreibung

### Stand der Technik

Die vorliegende Erfindung betrifft ein Verfahren sowie eine Vorrichtung zum Auswerten eines empfangenen Wechselsignals, insbesondere eines Ultraschallsignals. Die vorliegende Erfindung betrifft insbesondere Verbesserungen bei einer Erkennung eines Dämpfungserfolges beim Vergleich eines empfangenen Wechselsignals mit einem Referenzwert bzw. einer Referenzkurve bzw. einem Referenzsignal.

Aus der DE 2219045 A1 ist eine Vorrichtung zur Messung der Herzfrequenz mittels des Ultraschall-Doppler Prinzips bekannt. Dazu wird ein Ultraschallsignal auf das Herz abgegeben und ein Echosignal empfangen. Aus dem Echosignal werden die Dopplersignale extrahiert und daraus mittels verschiedener Schritte, die unter anderem eine Tiefpassfilterung der Dopplersiganle und ein zweimaliges Differenzieren umfassen, ein Signal gewonnen, das die Herzfrequenz sehr genau wiedergibt.

Die GB 2444298 A beschreibt eine Vorrichtung zum Schutz vor einem zu hohen Lautstärkepegel bei einem Lautsprecher, z.B. für ein Telefon. Dabei wird durch eine entsprechende Schaltung ein Signal, das von einem Audioverstärker geliefert wird, durch eine Impedanzschaltung so gedämpft, dass die sich ergebende Amplitude unterhalb eines Sicherheitsgrenzwerts liegt. Dabei wird dynamisch zwischen unterschiedlichen "Dämpfungspfaden" umgeschaltet, je nachdem ob die aktuelle Amplitude oberhalb oder unterhalb eines vorgegebenen Grenzwerts liegt. In einem Ausführungsbeispiel wird das Signal dabei gleichgerichtet und durchläuft einen Tiefpass (RC-Glied).

Das Dokument DE 10 2009 049 069 A1 beschreibt ein Verfahren zur Laufzeitmessung, wobei hierbei ein Wechselsignal gleichgerichtet und anschließend tiefpassgefiltert wird. Mittels einem zweifachen Differenzierer wird der Wendepunkt gefunden, um mittels anschließend Extrapolation den Pulsschlag zu bestimmen.

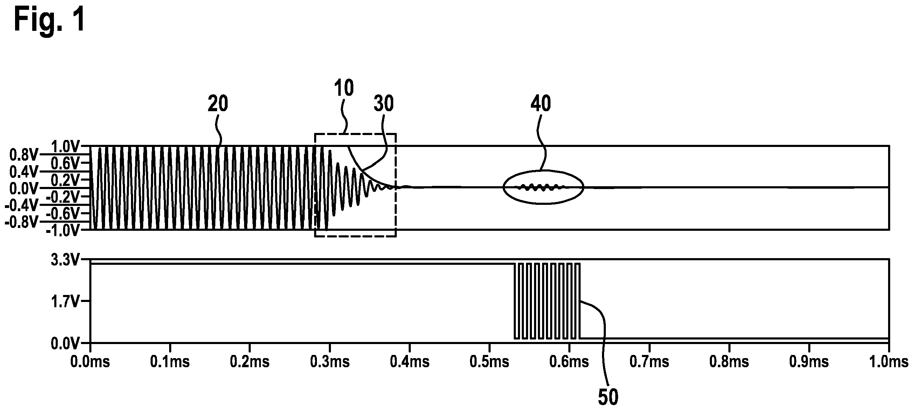

Wechselsignale werden im Stand der Technik beispielsweise durch Membranen, wie sie beispielsweise in Mikrofonen und Ultraschallwandlern verbaut sind, empfangen und zur Auswertung in elektrische Signale umgewandelt. Sofern die Membran sowohl zum Versenden der Wechselsignale als auch zum Empfangen der Wechselsignale verwendet werden soll, muss nach einem erfolgten Sendevorgang die Membran möglichst rasch zum Stillstand gebracht werden, um auf die Membran auftreffende Wechselsignale aus der Umgebung und die durch sie induzierten elektrischen Signale von den abklingenden Membranschwingungen des Sendevorgangs unterscheiden zu können. Für eine Dämpfung der Membran werden im Stand der Technik passive (z.B. ein Schaum) sowie aktive (z.B. Gegenansteuerung) Verfahren vorgeschlagen. Insbesondere bei den aktiven Verfahren ist eine Überprüfung des Dämpfungserfolges zur Optimierung des Dämpfungsverfahrens hilfreich. Beispielsweise kann hierzu ein abklingendes Wechselsignal mit einer Referenzfunktion verglichen werden, wobei sich Abstände bzw. Schnittpunkte zwischen dem Wechelsignal und dem Referenzsignal verschieben, wenn Parameter der aktiven Dämpfung verändert worden sind. Da Abklingvorgänge in der Natur häufig in Form einer e-Funktion stattfinden, kann zumindest für den Bereich des Ausschwingens ein RC-Glied zur Erzeugung einer Referenzfunktion herangezogen werden. Ein solcher Zusammenhang ist in Figur 1 als Bereich 10 gekennzeichnet. Durch erfolgreiche Anpassung der Dämpfungsparameter wurde das Abklingverhalten des dargestellten Wechselsignals derart beeinflusst, dass im Bereich 10 keine Schnittpunkte mit der Referenzkurve auftreten. Würden beispielsweise die Dämpfungsparameter derart geändert, dass das Wechselsignal weniger stark gedämpft wird, wären die ausschwingenden Amplituden größer und würden das Referenzsignal schneiden. Werden die abklingenden Membranschwingungen durch auf die Membran eintreffende Echos verstärkt, können die entstehenden Schnittpunkte mit der Referenzkurve als Echo erkannt werden, im Ansprechen worauf ein Mikrocontroller ein auswertbares Rechtecksignal erzeugen kann. Mit anderen Worten kann der Mikrocontroller eingerichtet sein, beispielsweise einen Digitalwert zwischen 0 und 1 jeweils im Ansprechen auf ein Erkennen eines Schnittpunktes umzuschalten. Problematisch an der bekannten Verfahrensweise ist jedoch, dass die Phasenlage zwischen den ausklingenden Membranschwingungen nicht notwendigerweise positiv mit den eintreffenden Echos interferieren muss. Beispielsweise könnten die eintreffenden Echos auch zu einer weiteren Absenkung der Membranschwingungen beitragen, so dass ein eintreffendes Echo nicht immer sicher erkannt werden kann. Ein weiteres Problem ergibt sich bei der Anpassung von Dämpfungsparametern im Rahmen einer aktiven Dämpfung beispielsweise von Ultraschallsensoren. Hierzu werden die Parameter im laufenden Betrieb variiert und die Auswirkung auf den Dämpfungserfolg beobachtet. Der Mikrocontroller wertet hierzu die Nachschwingdauer des Sensorsignals aus, wobei die Membranschwingungen dann als abgeklungen angesehen werden, wenn sie einen bestimmten Amplitudenwert nicht mehr überschreiten. Mit anderen Worten wird das Wechselsignal mit einer waagerechten, linearen Vergleichskurve in Beziehung gesetzt, und der Abklingvorgang dann als abgeschlossen betrachtet, wenn keine weiteren Schnittpunkte zwischen der Referenzkurve und dem Wechselsignal des Sendeempfängers (z.B. Ultraschallsensor) mehr auftreten. Da der Mikrocontroller aus der Position der Schnittpunkte Rückschlüsse auf den Erfolg veränderter Dämpfungsparameter zieht, ein Dämpfungserfolg jedoch mitunter lediglich eine geringe Verschiebung der Schnittpunkte (aufgrund abnehmender Amplituden) bewirkt, kann selbst bei erfolgreicher Änderung von Dämpfungsparametern dieser Erfolg nicht in jedem Fall erkannt werden. Erst nach einer Änderung, welche beispielsweise den bisher letzten Schnittpunkt beider Signale auflöst, indem die veränderte Dämpfung den für den letzten Schnittpunkt verantwortlichen Signalanteil des Wechselsignals unterhalb der Referenzkurve absenkt, "fehlt" bezüglich der zuletzt geänderten Dämpfungsparameter ein Schnittpunkt gegenüber den bisherigen Dämpfungsparametern. Auf diese Weise unterliegt das dem Mikrocontroller zur Verfügung stehende Signal einer recht groben Quantisierung. Es ist daher eine Aufgabe der vorliegenden Erfindung, die zuvor genannten Nachteile des Standes der Technik auszuräumen.

### Offenbarung der Erfindung

Die zuvor genannte Aufgabe wird erfindungsgemäß durch ein Verfahren sowie eine Vorrichtung zum Auswerten eines empfangenen Signals, insbesondere eines Wechselsignals mit den Merkmalen der unabhängigen Ansprüche gelöst.

Gemäß einem ersten Aspekt der vorliegenden Erfindung wird die vorstehend genannte Aufgabe durch ein Verfahren mit den Merkmalen gemäß Anspruch 1 gelöst. Das Verfahren eignet sich u.a. zur Erkennung von Echos in einem Wechselsignal, wobei das Wechselsignal beispielsweise ein Ultraschallsignal sein kann, welches aus einem Ultraschallsendeempfänger stammt. Im Rahmen der vorliegenden Erfindung sei unter einem "Wechselsignal" eine Wechselgröße verstanden, die beispielsweise eine (nicht notwendigerweise periodische) Membranschwingung, repräsentieren kann. Das Wechselsignal kann z.B. durch ein (nicht notwendigerweise gleichanteilsfreies) Wegsignal, eine Wechselspannung oder einen Wechselstrom dargestellt werden. Das erfindungsgemäße Verfahren umfasst ein Gleichrichten eines ersten Signals eines Sendeempfängers und ein Tiefpassfiltern des gleichgerichteten Signals. Das Gleichrichten des ersten Signals des Sendeempfängers (z.B. ein Ultraschallsendeempfänger) kann dabei beispielsweise durch eine Halbbrückenschaltung oder eine Vollbrückenschaltung, bevorzugt auch mittels eines aktiven Gleichrichters erfolgen. Durch einen Tiefpassfilter (beispielsweise ein Tiefpassfilter vierter Ordnung) wird aus dem gleichgerichteten Signal eine Signalform generiert, welche in etwa die Hüllkurve des gleichgerichteten Signals widerspiegelt. Erfindungsgemäß wird dieses tiefpassgefilterte Signal differenziert, wobei das Differenzieren insbesondere ein zweifaches Differenzieren umfasst. Aus dem differenzierten Signal wird dabei bevorzugt ein Echo erkannt. Bevorzugt kann ein Echo erkannt werden, wenn das zweifach differenzierte tiefpassgefilterte Signal auf einen Wendepunkt in der Hüllkurve hinweist. Insbesondere im Abklingbereich des Signals des Sendeempfängers befinden sich nach der erfindungsgemäßen Tiefpassfilterung keine Wendepunkte mehr, da die Hüllkurve eine abklingende e-Funktion beschreibt. Wird diese Kurve von einem Echo überlagert, stört das Echo die Charakteristik der e-Funktion und lässt sich somit als Wendepunkt im Hüllkurvensignal des Sendeempfängers nach Abschalten dessen Anregung detektieren.

Die Unteransprüche zeigen bevorzugte Ausführungsformen der vorliegenden Erfindung.

Weiter Bevorzugt umfasst das erfindungsgemäße Verfahren einen Schritt eines Vergleichens des tiefpassgefilterten Signals mit einem Referenzwert. Auf Grundlage des Vergleiches kann ein Dämpfungsverhalten des Sendeempfängers beurteilt werden. Der Referenzwert kann dabei insbesondere ein Schwellwert sei, der im Bereich der abklingenden Flanke der Hüllkurve des ersten Signals des Sendeempfängers liegt. Mit anderen Worten kann der Referenzwert so gewählt werden, dass nach einem Ausschalten der elektrischen Anregung des Sendeempfängers (zur Vorbereitung eines Sendevorgangs) der Referenzwert einen Punkt der Hüllkurve markiert, der zwischen dem maximalen (während der Anregung bestehenden) Hüllkurvenwert und einem stark ausgeschwungenen Teil der Flanke liegt, in welchem bereits einerseits Echos zu erwarten sein könnten und andererseits anderweitige Störungen und Unregelmäßigkeiten Einfluss auf die Hüllkurve nehmen könnten, welche nicht notwendigerweise in Zusammenhang mit dem Dämpfungsverhalten des Sendeempfängers in Verbindung stehen. Es sollte also der Referenzwert so hoch gewählt werden, dass ein Einfluss von Störungen und Echos auf den Hüllkurvenverlauf für die Dämpfungsuntersuchung gering bzw. unwahrscheinlich ist, andererseits sollte der Referenzwert so niedrig gewählt werden, dass bereits ein Mindestmaß an Energiedissipation stattgefunden hat, welches zur Beurteilung des Dämpfungsverhaltens verwendbar ist. Jedoch kann der Referenzwert auch als Kurve oder Werteschar vorgesehen werden, so dass der Vergleich des tiefpassgefilterten Signals mit dem Referenzwert auch eine Untersuchung der Abstände beider Kurven, ihrer gemeinsamen Schnittpunkte oder anderer relativer Charakteristika umfassen kann. Sofern ein vorbestimmtes Vergleichsergebnis festgestellt worden ist, kann das Dämpfungsverhalten des Sendeempfängers entweder als "in Ordnung" oder als "verbesserungsbedürftig" beurteilt werden.

Gemäß einem weiteren Aspekt betrifft die vorliegende Erfindung ein Verfahren zum Auswerten eines Signals mit den Merkmalen gemäß Anspruch 3, welches insbesondere für Ultraschallsignale als Wechselsignale geeignet ist. Das Verfahren umfasst den Schritt eines Gleichrichtens eines ersten Signals (beispielsweise eines Wechselsignals) eines Sendeempfängers, ein Tiefpassfiltern des gleichgerichteten Signals sowie ein Vergleichen des tiefpassgefilterten Signals mit einem Referenzwert. Das Gleichrichten des ersten Signals des Sendeempfängers (z.B. ein Ultraschallsendeempfänger) kann dabei beispielsweise bevorzugt mittels eines aktiven Gleichrichters erfolgen. Durch einen Tiefpassfilter (beispielsweise einen Tiefpassfilter vierter Ordnung) wird aus dem gleichgerichteten Signal eine Signalform generiert, welche in etwa die Hüllkurve des gleichgerichteten Signals widerspiegelt. Erfindungsgemäß wird dieses tiefpassgefilterte Signal mit einem Referenzwert verglichen und auf Grundlage des Vergleiches ein Dämpfungsverhalten des Sendeempfängers beurteilt. Der Referenzwert kann dabei insbesondere ein Schwellwert sein, der im Bereich der abklingenden Flanke der Hüllkurve des ersten Signals des Sendeempfängers liegt. Mit anderen Worten kann der Referenzwert so gewählt werden, dass nach einem Ausschalten der elektrischen Anregung des Sendeempfängers (zur Vorbereitung eines Empfangsvorgangs) der Referenzwert einen Punkt der Hüllkurve markiert, der zwischen dem maximalen (während der Anregung bestehenden) Hüllkurvenwert und einem stark ausgeschwungenen Teil der Flanke liegt, in welchem bereits einerseits Echos zu erwarten sein könnten und andererseits anderweitige Störungen und Unregelmäßigkeiten Einfluss auf die Hüllkurve nehmen könnten, welche nicht notwendigerweise in Zusammenhang mit dem Dämpfungsverhalten des Sendeempfängers in Verbindung stehen. Es sollte also der Referenzwert so hoch gewählt werden, dass ein Einfluss von Störungen und Echos auf den Hüllkurvenverlauf für die Dämpfungsuntersuchung gering bzw. unwahrscheinlich ist, andererseits sollte der Referenzwert so niedrig gewählt werden, dass bereits ein Mindestmaß an Energiedissipation stattgefunden hat, welches zur Beurteilung des Dämpfungsverhaltens verwendbar ist. Jedoch kann der Referenzwert auch als Kurve oder Werteschar vorgesehen werden, so dass der Vergleich des tiefpassgefilterten Signals mit dem Referenzwert auch eine Untersuchung der Abstände beider Kurven, ihrer gemeinsamen Schnittpunkte oder anderer relativer Charakteristika umfassen kann. Sofern ein vorbestimmtes Vergleichsergebnis festgestellt worden ist, kann das Dämpfungsverhalten des Sendeempfängers entweder als "in Ordnung" oder als "verbesserungsbedürftig" beurteilt werden.

In Verbindung mit beiden vorstehend genannten Aspekten der vorliegenden Erfindung kann der Schritt des Beurteilens weiter bevorzugt ein zweites Vergleichsergebnis involvieren. Beispielsweise kann hierzu ein zweites Signal des Sendeempfängers, welches gleichgerichtet und tiefpassgefiltert worden ist, ebenfalls mit einem Referenzwert oder dem gleichen Referenzwert verglichen werden, und nun beide Vergleichsergebnisse zur Beurteilung des Dämpfungsverhaltens und seiner Änderung herangezogen werden. Beispielsweise kann das zweite Signal in einem früheren Sendevorgang ermittelt und verarbeitet worden sein, während andere Parameter für eine (z.B. aktive) Dämpfung der Membranschwingungen des Sendeempfängers verwendet worden sind. Ergibt der Vergleich des zweiten Signals mit dem Referenzwert ein schlechteres Ergebnis, als der Vergleich des ersten Signals mit dem Referenzwert, können die Dämpfungsparameter, welche zum ersten Signal geführt haben, als günstiger beurteilt und nachfolgenden Dämpfungsvorgängen zugrunde gelegt werden. Je nachdem, ob zuerst das erste Signal oder das zweite Signal ermittelt worden ist, können somit die zuletzt verwendeten Dämpfungsparameter beibehalten oder in einem früheren Dämpfungsvorgang verwendeten Dämpfungsparameter als besser geeignet beurteilt und daher zukünftig verwendet werden.

Weiter bevorzugt kann der Schritt des Beurteilens ein Ergebnis eines zweiten Vergleiches involvieren. Der zweite Vergleich kann dabei analog den vorstehend beschriebenen Aspekten zu einem früheren Zeitpunkt stattgefunden haben. Mit anderen Worten kann ein zweites Signal des Sendeempfängers gleichgerichtet und tiefpassgefiltert worden sein und anschließend mit einem oder demselben Referenzwert verglichen worden sein. Der Vergleich kann dabei jeweils einen Abstand, eine relative Lage oder insbesondere die Lage von Schnittpunkten zwischen der Hüllkurve des Signals des Sendeempfängers und dem Referenzwert berücksichtigen. Die Beurteilung beider Vergleichsergebnisse kann beispielsweise ergeben, dass sich die Dämpfungsparameter anscheinend geändert oder nicht geändert haben. Des Weiteren kann beurteilt werden, ob sich das Dämpfungsverhalten des Sendeempfängers günstig oder ungünstig verändert hat. Auch in diesem Zusammenhang ist unter einem "Referenzwert" nicht ausschließlich ein einzelner Wert, eine horizontale Gerade oder eine anders beschränkte Werteschar zu verstehen, sondern jegliche zur Bewertung des Dämpfungsverhaltens geeignete, von Zeit und Amplitude des Signals des Sendeempfängers abhängige Referenzgröße zu verstehen. Dies bietet den Vorteil, dass verlässliche Aussagen über eine zeitliche Veränderung des Dämpfungsverhaltens eines Sendeempfängers möglich sind.

Weiter bevorzugt kann das erfindungsgemäße Verfahren eine Änderung eines Parameters einer Dämpfung des Sendeempfängers in vordefinierter Weise umfassen. Mit anderen Worten kann eine bewusste und beabsichtigte Änderung des Dämpfungsverhaltens durch Änderung eines Parameters vorgenommen werden, um beispielsweise das Dämpfungsverhalten zu optimieren. Die Dämpfung kann dabei insbesondere aktiv, also beispielsweise durch Ansteuerung des Sendeempfängers mit einem sein Ausschwingen beschleunigenden elektrischen Signal, erfolgen. Als Parameter zur Anpassung der aktiven Dämpfung kommen dabei beispielsweise Phasenlage, Frequenz und Amplitude des verwendeten Dämpfungssignals in Frage. Sofern die Beurteilung des geänderten Dämpfungsverhaltens günstiger ausfällt als für ein vor der Parameteränderung detektiertes Dämpfungsverhalten, können die geänderten Parameter für nachfolgende Signale des Sendeempfängers verwendet werden. Dies bietet den Vorteil, dass beispielsweise durch Temperaturunterschiede veranlasste Veränderungen des Verhaltens des Sendeempfängers kontinuierlich kompensiert werden können.

Dabei kann der Vergleich zwischen dem verarbeiteten Signal des Sendeempfängers und dem Referenzwert, wie die relative Lage von Abständen oder sogar Schnittpunkten, berücksichtigt werden. Insbesondere Schnittpunkte lassen sich dabei schaltungstechnisch besonders günstig durch Komparatoren oder differenzwertbildende Glieder ermitteln.

Bevorzugt kann das tiefpassgefilterte Signal des Sendeempfängers zur Auswertung beim Vergleichen und Beurteilen in einen Mikrocontroller eingelesen werden. Der Mikrocontroller kann dabei eine Verarbeitungseinheit sein, deren Arbeitsweise sich schnell und einfach programmieren lässt. Des Weiteren sind Mikrocontroller als Massenprodukte eine kostengünstige Möglichkeit, Signalverarbeitung in kleinen Bauteilen vorzusehen.

Gemäß einem weiteren Aspekt der vorliegenden Erfindung wird eine Vorrichtung zur Verfügung gestellt, welche einen Sendeempfänger, der insbesondere als Ultraschallwandler ausgeführt sein kann, einen Gleichrichter, einen Tiefpassfilter und eine Auswerteeinheit umfasst. Die Auswerteeinheit kann dabei insbesondere als Mikrocontroller ausgestaltet sein. Dabei ist die Vorrichtung eingerichtet, ein Verfahren nach einem der vorstehenden Aspekte und deren Ausgestaltungen auszuführen. Der Tiefpassfilter kann dabei beispielsweise als Tiefpassfilter vierter Ordnung ausgestaltet sein, während der Gleichrichter als Halbbrückenschaltung, Vollbrückenschaltung oder bevorzugt als aktiver Gleichrichter ausgeführt sein kann. Ein Tiefpassfilter vierter Ordnung sowie ein aktiver Gleichrichter haben sich als für die erfindungsgemäße Signalverarbeitung geeignet herausgestellt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Darstellung eines Wechselsignals in Verbindung mit einem Referenzsignal sowie ein aus dem Vergleich beider resultierendes Komparatorsignal;
- Figur 2: eine Darstellung eines Wechselsignals in Verbindung mit einem alternativen Referenzsignal sowie ein aus dem Vergleich beider resultierendes Komparatorsignal;
- Figur 3: eine Darstellung eines Wechselsignals sowie dessen erfindungsgemäß erstellte Hüllkurve und ein zur Beurteilung des Dämpfungserfolges verwendetes Komparatorsignal;
- Figur 4: eine schematische Übersicht über Bestandteile eines Ausführungsbeispiels einer Vorrichtung gemäß der vorliegenden Erfindung;
- Figur 5: ein Flussdiagramm visualisierend Schritte eines Ausführungsbeispiels eines Verfahrens gemäß der vorliegenden Erfindung;
- Figur 6: ein Flussdiagramm visualisierend Schritte eines Ausführungsbeispiels eines alternativen Verfahrens gemäß der vorliegenden Erfindung;
- Figur 7: eine Darstellung eines Wechselsignals, dessen gleichgerichteten Signals sowie eines tiefpassgefilterten Signals des gleichgerichteten Signals;
- Figur 8: eine Darstellung des tiefpassgefilterten Signals aus Figur 7 sowie eines zur Beurteilung des Dämpfungserfolges herangezogenen Komparatorsignals;
- Figur 9: eine Darstellung des tiefpassgefilterten Signals aus Figur 8 sowie dessen erster Ableitung und eines zur Auswertung des abgeleiteten Signals verwendeten Komparatorsignals; und
- Figur 10: eine Darstellung des in Figur 8 gezeigten tiefpassgefilterten Signals sowie dessen zweiter Ableitung und eines zur Erkennung von Wendepunkten verwendeten Komparatorsignals.

### Ausführungsformen der Erfindung

Wie eingangs diskutiert, zeigt Figur 1 ein Wechselsignal 20 sowie ein Referenzsignal 30, welches im Ausklingbereich 10 des Wechselsignals 20 an dessen fallende Flanke angepasst ist. Während das Referenzsignal 30 im Ausklingbereich 10 im Wesentlichen einer e-Funktion folgt, trifft dies auf die Hüllkurve des Wechselsignals 20 nicht vollständig zu. Bei der Anpassung der Referenzkurve 30 an das Wechselsignal 20 müssen daher gewisse Toleranzen in Kauf genommen werden, um eine irrtümliche Detektion vermeintlicher Echos aufgrund von Störungen oder thermischen Einflüssen zu vermeiden. Aufgrund der Toleranzen ergibt sich im Ausklingbereich 10 jedoch auch eine geringere Empfindlichkeit für die Erkennung tatsächlich vorhandener Echos. Etwa 0,12 ms nach dem Ende des Ausklingbereichs 10 ist das Wechselsignal eines auf den Sendeempfänger eintreffenden Echos 40 erkennbar. Die Schnittpunkte zwischen der Referenzkurve 30 und dem Echo 40 werden in dem unteren Diagramm der Figur 1 durch Spannungssprünge des Ausgangssignals 50 eines Komparators repräsentiert. Mit anderen Worten könnte das Komparatorsignal 50 als Grundlage für eine digitale Auswertung hinsichtlich eintreffender Echos 40 verwendet werden.

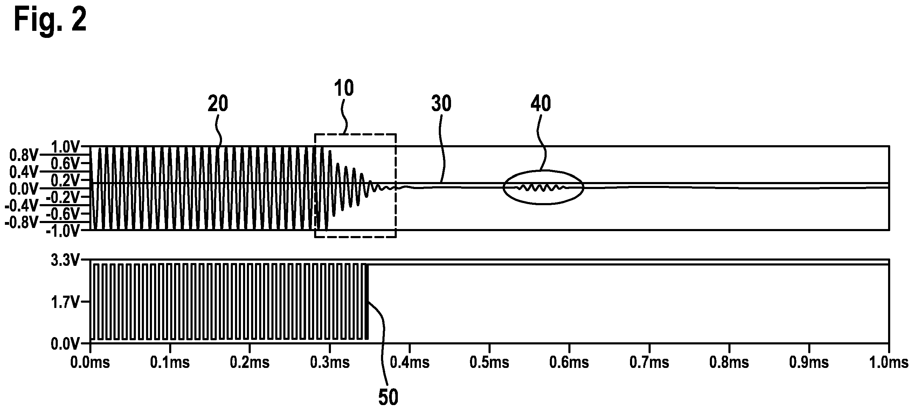

Figur 2 visualisiert ein bekanntes Problem bei der Auswertung eines Dämpfungserfolges bei Ultraschallsensoren als Sendeempfänger. Das Wechselsignal 20 wird mit einem linearen, horizontalen Schwellwert 30 verglichen, um festzustellen, wie sich das Ausklingverhalten der Membranschwingungen nach Abschalten der Anregung verändert. Im unteren Diagramm der Figur 2 ist das korrespondierende Komparatorsignal 50 dargestellt, welches die Schnittpunkte zwischen dem Wechselsignal 20 und dem Referenzwert 30 wiedergibt. Wird nun angenommen, dass eine digitale Auswertung des Komparatorsignals 50 erfolgt (beispielsweise durch Zählen der Flanken im Komparatorsignal 50), wird schnell ersichtlich, dass eine geringe Änderung des Dämpfungsverhaltens nicht notwendigerweise zu einem erkennbaren Ergebnis am Ausgang des Komparators führt. Denn eine Änderung der Amplituden des Wechselsignals 20 führt nur dann zu einem veränderten Ergebnis, wenn die Anzahl der Schnittpunkte zwischen Wechselsignal 20 und dem Referenzwert 30 variieren. Kleine Änderungen im Dämpfungsverhalten des Wechselsignals 20 können für die Auswertung des Dämpfungserfolges jedoch ebenfalls wichtig sein, so dass die Quantisierung auf die Anzahl der Rechteckpulse im Komparatorsignal 50 die Sensitivität des Verfahrens unerwünscht mindert.

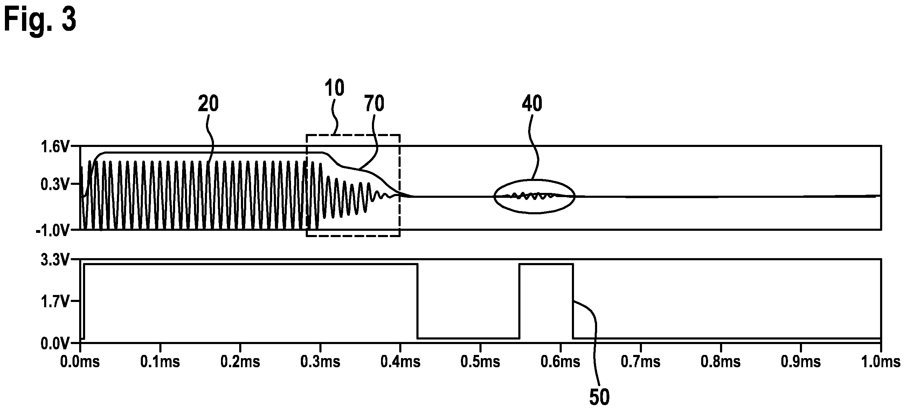

Figur 3 zeigt eine erfindungsgemäße Verarbeitung und Auswertung eines Wechselsignals 20, für welches erfindungsgemäß durch Gleichrichten und Tiefpassfiltern eine Hüllkurve 70 generiert worden ist. Ein Komparatorsignal 50 wechselt dann von einem niedrigen auf einen hohen Spannungswert, wenn die Hüllkurve 70 über einen (nicht in Figur 3 dargestellten) Referenzwert steigt, und fällt auf einen niedrigeren Spannungswert, wenn die Hüllkurve 70 unter den Referenzwert fällt. Entsprechend kann an der ersten fallenden Flanke des Komparatorsignals 50 der Dämpfungserfolg festgemacht werden, während an der zweiten steigenden Flanke des Komparatorsignals 50 ein eintreffendes Echo 40 erkannt werden kann. Die zweite fallende Flanke des Komparatorsignals 50 zeigt dabei ein Ende des eintreffenden Echos 40 an. Es könnten jedoch auch verschiedene Referenzwerte festgelegt werden, so dass beispielsweise eine Hysterese dazu führt, dass das Komparatorsignal 50 bereits ab einem höheren Referenzwert auf einen niedrigen Spannungspegel fällt und ab einem zweiten (niedrigeren) Referenzwert auf einen höheren Spannungswert springt. Alternativ oder zusätzlich könnte auch der Komparator eingerichtet sein, mehr als zwei unterschiedliche Spannungswerte an seinem Ausgang ausgeben zu können. Auf diese Weise könnten mehr Informationen über den Kurvenverlauf am Ausgang des Komparators vermittelt werden.

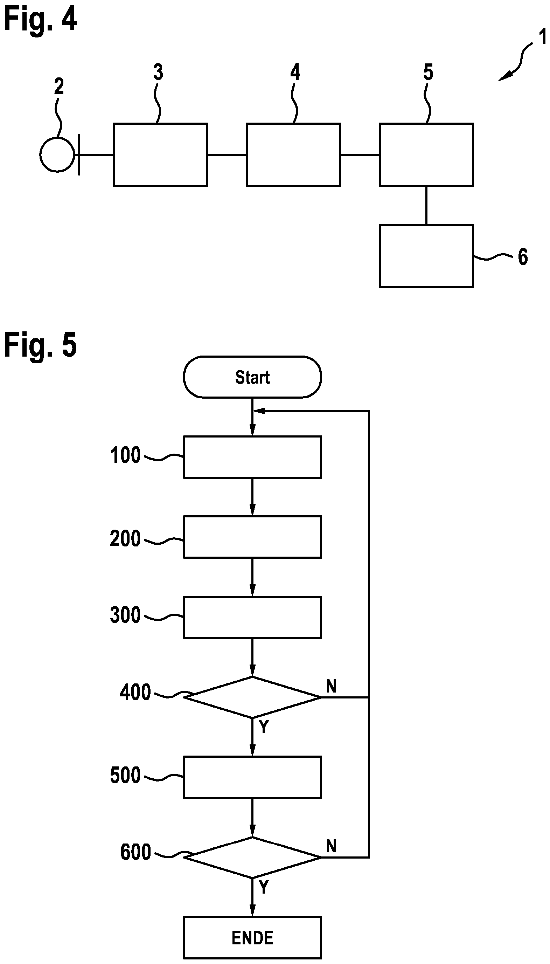

Figur 4 zeigt eine erfindungsgemäße Vorrichtung 1, welche einen Ultraschallsensor 2 als Sendeempfänger aufweist. Dieser kann beispielsweise im Stoßfänger eines Kraftfahrzeugs angeordnet sein. Der Ultraschallsensor 2 ist mit einem aktiven Gleichrichter 3 verbunden, der das Wechselsignal des Ultraschallsensors 2 gleichrichtet. Der aktive Gleichrichter 3 ist ausgangsseitig mit einem Tiefpassfilter 4 verbunden, der das gleichgerichtete Signal tiefpassfiltert. Mit anderen Worten liegt am Ausgang des Tiefpassfilters 4 ein in etwa der Hüllkurve des Wechselsignals 20 entsprechendes Signal an, welches in einem Mikrocontroller 5 als Auswerteeinheit verarbeitet wird. Der Mikrocontroller 5 ist andererseits mit einem Speicher 6 verbunden, in welchem er Auswerteergebnisse ablegen und diese zu einem späteren Zeitpunkt, beispielsweise für eine Beurteilung einer Dämpfungsparameteränderung oder einer anderen Veränderung eines Dämpfungsverhaltens, wieder abrufen kann. Der Mikrocontroller 50 kann dabei eingerichtet sein, das tiefpassgefilterte Signal zu differenzieren, insbesondere zweifach zu differenzieren, und/oder dieses mit einem Referenzwert, einer Referenzwerteschar oder einem Referenzsignal, insbesondere hinsichtlich etwaiger Schnittpunkte, zu vergleichen.

Figur 5 zeigt ein Flussdiagramm, visualisierend die Schritte gemäß einem Ausführungsbeispiel eines erfindungsgemäßen Verfahrens, mittels welchem Echos in einem Wechselsignal 20 detektiert werden können. Das Verfahren beginnt ("Start") mit dem Empfangen eines Wechselsignals eines Sendeempfängers. Dies kann beispielsweise während der Anregung des Sendeempfängers und/oder während eines Abklingens der Membran des Sendeempfängers und/oder beim Empfangen von Echos 40 mittels des Sendeempfängers geschehen. In Schritt 100 wird das erhaltene Signal gleichgerichtet. In Schritt 200 wird das gleichgerichtete Signal tiefpassgefiltert. In Schritt 300 wird das tiefpassgefilterte Signal in einem Komparator 5 mit einem Referenzwert verglichen. Sofern sich in Schritt 400 ergibt, dass das Ausgangssignal des Komparators nicht zu einem Echo korrespondiert ("N"), fährt das Verfahren in Schritt 100 mit Gleichrichten eines empfangenen Signals fort. Sofern in Schritt 400 entschieden wird, dass ein Echo detektiert worden ist ("Y"), so kann eine weiterführende Signalverarbeitung in Schritt 500 informiert werden, dass ein Echo empfangen worden ist. Beispielsweise können Signale an eine Anzeigeeinheit oder eine akustische Ausgabeeinheit zur Information für einen Anwender oder an eine Steuereinheit zur Einleitung von Fahrmanövern ausgegeben werden. In Schritt 600 wird überprüft, ob eine vordefinierte Abbruchbedingung, wie beispielsweise ein Ausschalten eines die vorliegende Erfindung verwendenden Parkassistenzsystems, erfüllt ist. Ist dies nicht der Fall ("N"), fährt das Verfahren in Schritt 100 mit dem Gleichrichten empfangener Wechselsignale 20 fort. Ist die Abbruchbedingung erfüllt ("Y"), endet das Verfahren.

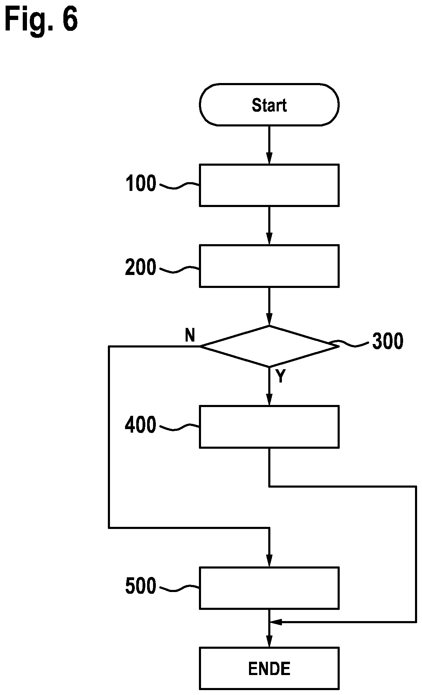

Figur 6 zeigt ein Flussdiagramm, veranschaulichend Schritte eines alternativen Ausführungsbeispiels eines erfindungsgemäßen Verfahrens, gemäß welchem eine Dämpfungsanpassung erfolgen kann. Das dargestellte Verfahren kann beispielsweise innerhalb eines in Figur 5 dargestellten Verfahrens dazu verwendet werden, um Dämpfungsparameter in geänderten Umgebungsbedingungen nachzuführen. In Schritt 100 werden hierzu Dämpfungsparameter in vordefinierter Art und Weise geändert. Beispielsweise kann eine Phase, eine Frequenz oder eine Amplitude eines zur Dämpfung der Membranschwingungen verwendeten elektrischen Signals verändert werden. In Schritt 200 wird überprüft, ob die relative Lage zwischen einem empfangenen, gleichgerichteten und tiefpassgefilterten Signal 20 eines Sendeempfängers 2 und einem Referenzsignal 30 sich verändert hat. In Schritt 300 wird gegebenenfalls überprüft, ob die Veränderung der Dämpfungsparameter eine günstige Auswirkung auf das Dämpfungsverhalten der Membran des Sendeempfängers 2 hatte. Ist dies nicht der Fall ("N"), werden in Schritt 500 die bisherigen Dämpfungsparameter zur Weiterverwendung definiert. Sofern die Parameterveränderung eine günstige Veränderung des Dämpfungsverhaltens bewirkt hat ("Y"), wird in Schritt 400 festgelegt, dass die neuen Dämpfungsparameter nachfolgend verwendet werden sollen. Anschließend endet das Verfahren ("Ende").

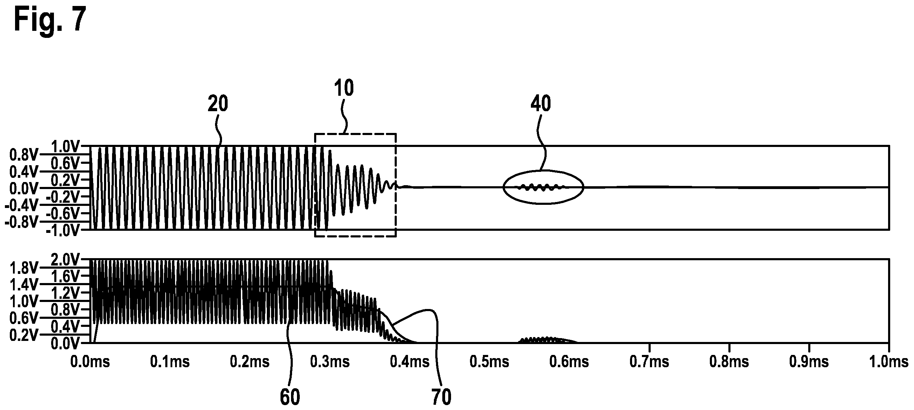

In Figur 7 ist ein Wechselsignal 20 eines Sendeempfängers 2 im oberen Diagramm dargestellt, dessen Gestalt in Verbindung mit Figur 1 bereits diskutiert worden ist. Im unteren Diagramm ist ein zum Wechselsignal 20 korrespondierendes gleichgerichtetes Signal 60 sowie das Ergebnis 70 der Tiefpassfilterung dargestellt.

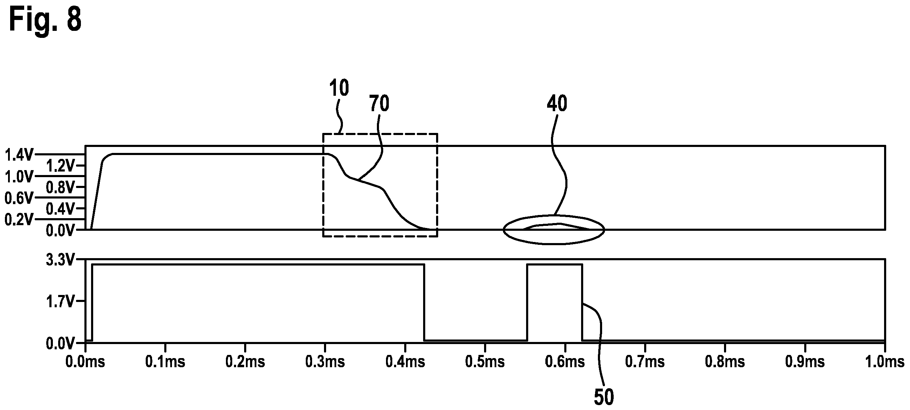

Figur 8 zeigt in seinem oberen Diagramm das tiefpassgefilterte Signal 70 sowie im unteren Diagramm ein Komparatorsignal 50, welches sich ergibt, wenn das tiefpassgefilterte Signal 70 mit einem nur wenig über 0 V liegenden Referenzwert (nicht in Figur 8 dargestellt) verglichen wird. Nach dem Aussenden und Abklingen des tiefpassgefilterten Signals 70 fällt die Flanke des Komparatorsignals 50 und steigt erst bei Eintreffen eines Echos 40 auf einen höheren Spannungswert. Nach dem Abklingen des Echos 40 fällt der Spannungswert des Komparatorsignals 50 zurück auf den niedrigeren Wert.

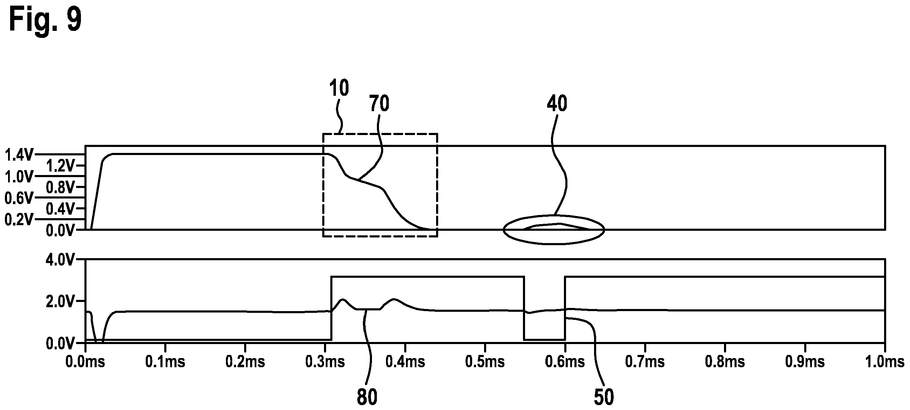

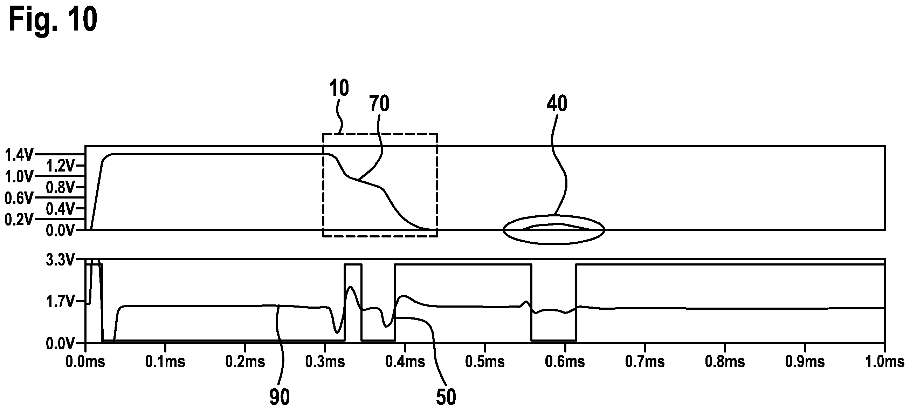

In den Figuren 9 und 10 wird der Übersicht halber jeweils das im oberen Diagramm der Figur 8 dargestellte tiefpassgefilterte Signal 70 wiederholt, ohne dass im Folgenden darauf eingegangen wird. Im unteren Diagramm von Figur 9 ist qualitativ (Vorzeichen vertauscht) die einfache Ableitung 80 des tiefpassgefilterten Signals 70 dargestellt, auch wenn die Ordinate des unteren Diagramms ebenfalls in "Volt" skaliert ist. Ebenfalls im unteren Diagramm ist ein Komparatorsignal 50 dargestellt, welches über einen (nicht dargestellten) Referenzwert (in "Volt") steigende Flanken der ersten Ableitung mit einer steigenden Flanke quittiert und unter den Referenzwert fallende Flanken der ersten Ableitung mit einer fallenden Flanke quittiert. Während der Bereich des eintreffenden Echos 40 vom Komparatorsignal 50 gut abgebildet wird, bleibt ein fortgeschrittenes Abklingen des tiefpassgefilterten Signals 70 im Komparatorsignal 50 folgenlos. Jedoch ist der Beginn des Abklingens des tiefpassgefilterten Signals 70 als steigende Flanke im Komparatorsignal 50 wiedergegeben. Da die hohen Werte des tiefpassgefilterten Signals 70 gegenüber Störungen besonders unempfindlich sind, kann dieser Bereich vorzugsweise dafür verwendet werden, ein Dämpfungsverhalten zuverlässig zu klassifizieren.

Das untere Diagramm in Figur 10 zeigt ein zweifach differenziertes Signal 90, welches aus dem in Figur 9 dargestellten einfach differenzierten Signal 80 erzeugt worden ist. Auch das zweifach differenzierte Signal 90 ist mit einem negativen Vorzeichen gegenüber dem einfach differenzierten Signal 80 aufgetragen. Zudem ist das Komparatorsignal 50, welches sich bei einem Vergleich des zweifach differenzierten Signal 90 mit einem im Bereich von 1,6 V befindlichen Referenzwert ergibt, wenn bei einem Überschreiten des Referenzwertes das Komparatorsignal von einem niedrigen Spannungswert auf einen hohen Spannungswert wechselt und bei einem Unterschreiten des zweifach differenzierten Signals 90 gegenüber dem Referenzwert das Komparatorsignal 50 von einem hohen Spannungswert auf einen niedrigen Spannungswert zurückwechselt. Im Vergleich mit dem Wechselsignal 20 wird ersichtlich, dass das in Figur 10 dargestellte Komparatorsignal 50 jeweils an den Wendepunkten des Hüllkurvensignals 70 Flanken aufweist. Da, wie eingangs ausgeführt, nach Abschalten der Anregung des Wechselsignals 20 die Hüllkurve 70 des ausklingenden reinen Wandlersignals einer e-Funktion folgt, sind auch bei einer mehrfachen Differentiation der Hüllkurve 70 in diesem Bereich keinerlei Wendepunkte zu erwarten. Die Wendepunkte sind daher ein Indikator dafür, dass das ausklingende Wechselsignal 20 durch ein Echo 40 überlagert ist. Im Beispiel der Darstellung der Figur 10 wird deutlich, dass auch im Abklingbereich 10 des Wechselsignals 20 ein Echosignal "versteckt" sein muss, da die e-Funktion der Hüllkurve 70 des Wechselsignals 20 im Abklingbereich 10 gestört ist und das Komparatorsignal 50 des zweifach differenzierten Signals 90 im Abklingbereich 10 gleich zwei positive Flanken und eine negative Flanke aufweist. Die Punkte, an denen das Komparatorsignal 50 in Figur 10 im Abklingbereich 10 Flanken aufweist, können somit als Indikator dafür gelten, dass bereits kurz nach Abschalten der Anregung des Wechselsignals 20 ein Echosignal eingegangen ist.

Es ist daher ein Kerngedanke der vorliegenden Erfindung, ein Wechselsignal 20 eines Sendeempfängers 2 zunächst gleichzurichten und anschließend tiefpasszufiltern. Auf diese Weise wird ein hüllkurvenartiges Signal erzeugt, welches gegenüber den im Stand der Technik bekannten Verfahren gleich mehrere Vorteile zur Auswertung bietet. Einerseits entfällt hierdurch eine Quantisierung geringfügiger Signaländerungen, wie sie durch Vergleich des Wechselsignals mit einem Referenzwert auftreten. Auf diese Weise ist eine feinere Auflösung beispielsweise zum Anpassen von Dämpfungsparametern, möglich. Andererseits kann das generierte hüllkurvenähnliche Signal durch Differentiation auf Vorhandensein von Signalen untersucht werden, welche nicht allein aufgrund des Ausschwingens einer Membran des Sendeempfängers entstanden sind. Beispielsweise können Echos, welche mittels des Sendeempfängers empfangen worden sind, durch eine zweifache Differentiation des Hüllkurvensignals detektiert werden, da sie zu Wendepunkten innerhalb der Hüllkurve führen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zur Erkennung von Echos (40) in einem abklingenden Wechselsignal (20) eines Sendeempfängers (2), umfassend die Schritte
- Gleichrichten eines ersten Signals (20) des Sendeempfängers (2),
- Tiefpassfiltern des gleichgerichteten Signals (60), wobei das tiefpassgefilterte Signal (70) die Hüllkurve des gleichgerichteten Signals (60) widerspiegelt
- zweifaches Differenzieren des tiefpassgefilterten Signals (70),
wobei das zweifach differenzierte Signal (90) zur Bestimmung von Wendepunkten in dem tiefpassgefilterten Signal (70) verwendet wird,
**dadurch gekennzeichnet, dass**
ein Echo (40) in dem abklingenden Wechselsignal (20) des Sendeempfängers (2) erkannt wird, wenn das zweifach differenzierte, tiefpassgefilterte Signal (70) auf einen Wendepunkt in der Hüllkurve hinweist, weiter umfassend die Schritte
- Vergleichen des zweifach differenzierten Signals mit einem Referenzwert, und
- Ermitteln des Wendepunktes des tiefpassgefilterten Signals auf Grundlage des Vergleiches.

2. Verfahren nach Anspruch 1, weiter umfassend
- Vergleichen des tiefpassgefilterten Signals (70) mit dem Referenzwert (30), und
- Beurteilen eines Dämpfungsverhaltens des Sendeempfängers (2) auf Grundlage des Vergleiches.

3. Verfahren nach Anspruch 2, wobei der Schritt des Beurteilens ein Ergebnis eines zweiten Vergleiches involviert, welcher für ein zweites Signal (20) des Sendeempfängers (2) durchgeführt worden ist, wobei auch das zweite Signal (20) gleichgerichtet, tiefpassgefiltert und mit dem Referenzwert (30) verglichen worden ist.

4. Verfahren nach einem der vorstehenden Ansprüche 2 oder 3, weiter umfassend die Schritte
- Ändern eines Parameters einer, insbesondere aktiven, Dämpfung des Sendeempfängers (2) in vordefinierter Weise, und
- Verwenden des geänderten Parameters für nachfolgende Signale des Sendeempfängers (2), wenn die Beurteilung des Dämpfungsverhaltens für den geänderten Parameter günstiger ausfällt als für den ungeänderten Parameter.

5. Verfahren nach einem der vorstehenden Ansprüche 2 bis 4, wobei der Vergleich eine Untersuchung einer relativen Lage, insbesondere eines Schnittpunktes, eines tiefpassgefilterten Signals (70) mit dem Referenzwert (30) umfasst.

6. Verfahren nach einem der vorstehenden Ansprüche, weiter umfassend die Schritte
- Einlesen des tiefpassgefilterten Signals (70) in einen Mikrocontroller (5).

7. Verfahren nach einem der vorstehenden Ansprüche, wobei das Tiefpassfiltern ein Tiefpassfiltern vierter Ordnung umfasst, und insbesondere mittels eines digitalen Filters (4) durchgeführt wird.

8. Verfahren nach einem der vorstehenden Ansprüche, wobei das Gleichrichten durch einen aktiven Gleichrichter (3) durchgeführt wird.

9. Vorrichtung umfassend
- einen Sendeempfänger (2), insbesondere einen Ultraschallwandler,
- einen Gleichrichter (3),
- einen Tiefpassfilter (4), und
- eine Auswerteeinheit (5), insbesondere einen Mikrocontroller, wobei die Vorrichtung (1) eingerichtet ist, ein Verfahren nach einem der vorstehenden Ansprüche auszuführen.

## Claims

1. Method for detecting echoes (40) in a decaying alternating signal (20) from a transceiver (2), comprising the steps of
- rectifying a first signal (20) from the transceiver (2),
- subjecting the rectified signal (60) to low-pass filtering, wherein the low-pass-filtered signal (70) reflects the envelope of the rectified signal (60),
- subjecting the low-pass-filtered signal (70) to double differentiation, wherein the double-differentiated signal (90) is used to determine turning points in the low-pass-filtered signal (70),
**characterized in that**
an echo (40) is detected in the decaying alternating signal (20) from the transceiver (2) if the double-differentiated, low-pass-filtered signal (70) indicates a turning point in the envelope, also comprising the steps of
- comparing the double-differentiated signal with a reference value, and
- determining the turning point of the low-pass-filtered signal on the basis of the comparison.

2. Method according to Claim 1, also comprising
- comparing the low-pass-filtered signal (70) with the reference value (30), and
- assessing an attenuation behaviour of the transceiver (2) on the basis of the comparison.

3. Method according to Claim 2, wherein the assessing step involves a result of a second comparison which has been carried out for a second signal (20) from the transceiver (2), wherein the second signal (20) has also been rectified, subjected to low-pass filtering and compared with the reference value (30) .

4. Method according to either of the preceding Claims 2 and 3, also comprising the steps of
- changing a parameter of an attenuation, in particular an active attenuation, of the transceiver (2) in a predefined manner, and
- using the changed parameter for subsequent signals from the transceiver (2) if the assessment of the attenuation behaviour is more favourable for the changed parameter than for the unchanged parameter.

5. Method according to one of the preceding Claims 2 to 4, wherein the comparison comprises an investigation of a relative position, in particular a point of intersection, of a low-pass-filtered signal (70) with the reference value (30).

6. Method according to one of the preceding claims, also comprising the steps of
- reading the low-pass-filtered signal (70) into a microcontroller (5).

7. Method according to one of the preceding claims, wherein the low-pass filtering comprises fourth-order low-pass filtering and is carried out by means of a digital filter (4), in particular.

8. Method according to one of the preceding claims, wherein the rectification is carried out by means of an active rectifier (3).

9. Apparatus comprising
- a transceiver (2), in particular an ultrasonic transducer,
- a rectifier (3),
- a low-pass filter (4), and
- an evaluation unit (5), in particular a microcontroller, wherein the apparatus (1) is set up to carry out a method according to one of the preceding claims.

## Revendications

1. Procédé de reconnaissance d'échos (40) dans un signal alterné (20) décroissant d'un émetteur-récepteur (2), comprenant les étapes suivantes
- redressement d'un premier signal (20) de l'émetteur-récepteur (2),
- filtrage passe-bas du signal redressé (60), le signal filtré passe-bas (70) reflétant l'enveloppante du signal redressé (60),
- double différentiation du signal filtré passe-bas (70), le signal doublement différentié (90) étant utilisé pour déterminer des points de retournement dans le signal filtré passe-bas (70),
**caractérisé en ce que**
un écho (40) est reconnu dans le signal alterné (20) décroissant de l'émetteur-récepteur lorsque le signal filtré passe-bas (70) doublement différentié notifie de la présence d'un point de retournement dans l'enveloppante, comprenant en outre les étapes suivantes
- comparaison du signal doublement différentié à une valeur de référence, et
- détermination du point de retournement du signal filtré passe-bas en se basant sur la comparaison.

2. Procédé selon la revendication 1, comprenant en outre
- comparaison du signal filtré passe-bas (70) à la valeur de référence (30) et
- évaluation d'un comportement d'atténuation de l'émetteur-récepteur (2) en se basant sur la comparaison.

3. Procédé selon la revendication 2, l'étape d'évaluation faisant appel à un résultat d'une deuxième comparaison qui a été effectuée pour un deuxième signal (20) de l'émetteur-récepteur (2), le deuxième signal (20) ayant lui aussi été redressé, filtré passe-bas et comparé à la valeur de référence (30).

4. Procédé selon l'une des revendications précédentes 2 ou 3, comprenant en outre les étapes suivantes
- modification d'un paramètre d'une atténuation, notamment active, de l'émetteur-récepteur (2) d'une manière prédéfinie, et
- utilisation du paramètre modifié pour les signaux suivants de l'émetteur-récepteur (2) lorsque l'évaluation du comportement d'atténuation pour le paramètre modifié apparaît plus avantageuse que pour le paramètre non modifié.

5. Procédé selon l'une des revendications précédentes 2 à 4, la comparaison comprenant une analyse d'une position relative, notamment d'un point d'intersection, d'un signal filtré passe-bas (70) avec la valeur de référence (30).

6. Procédé selon l'une des revendications précédentes, comprenant en outre les étapes suivantes
- chargement du signal filtré passe-bas (70) dans un microcontrôleur (5).

7. Procédé selon l'une des revendications précédentes, le filtrage passe-bas comprenant un filtrage passe-bas du quatrième ordre et étant notamment effectué au moyen d'un filtre numérique (4).

8. Procédé selon l'une des revendications précédentes, le redressement étant effectué par un redresseur actif (3).

9. Dispositif comprenant
- un émetteur-récepteur (2), notamment un transducteur ultrasonique,
- un redresseur (3),
- un filtre passe-bas (4), et
- une unité d'interprétation (5), notamment un microcontrôleur, le dispositif (1) étant conçu pour mettre en oeuvre un procédé selon l'une des revendications précédentes.
